# EUROPÄISCHE PATENTSCHRIFT

(11) **EP 1 116 816 B1**
(45) Veröffentlichungstag und Bekanntmachung des Hinweises auf die Patenterteilung: **14.07.2004**
(21) Anmeldenummer: 00124886.3
(22) Anmeldetag: 15.11.2000
(51) Int. Cl.: D21B 1/32

(54) **Verfahren zur Auflösung von Altpapier**
Method for pulping wastepaper
Procédé de mise en pâte de vieux papiers

(30) Priorität: 05.01.2000 DE 10000181
(43) Veröffentlichungstag der Anmeldung: 18.07.2001
(73) Patentinhaber: Voith Paper Patent GmbH, 89522 Heidenheim (DE)
(72) Erfinder: Dockal-Baur, Jürgen, 88273 Fronreute (DE); Gommel, Axel, 88214 Ravensburg (DE); Müller, Wolfgang, 88250 Weingarten (DE); Selder, Harald, 88281 Schlier (DE); Steidele, Andreas, 88213 Ravensburg (DE); Steinbild, Klaus, Appleton, WI 54914 (US)

(56) Entgegenhaltungen:
- DE-A- 3 439 098

## Beschreibung

Das Verfahren dient zur Auflösung von Altpapier.

Bekanntlich werden Verfahren der o.g. Art in der Weise zugeführt, dass das Altpapier in dem in der Papierfabrik angelieferten Zustand in einen Stofflöser eingetragen wird. Dabei dient dieser Stofflöser zur Vermischung mit Wasser und zur Auflösung der Papierbahnen. Erforderlichenfalls kann vor dem Stofflöser bereits eine Station zur Entfernung der Ballendrähte oder Ballenränder vorgesehen sein. In der Regel werden alle Bestandteile des Altpapierballens, eventuell ohne die besagten Bänder oder Drähte, in den Stofflöser eingeworfen und dort mehr oder weniger stark mechanisch bearbeitet. Eine weitere unerwünschte Folge des bekannten Verfahrens kann neben dem hohen Energieverbrauch im Stofflöser eine Zerkleinerung von faserfremden Begleitstoffen sein, die so weit geht, dass ihre spätere Entfernung schwierig wird. Die große Menge der so in die Suspension gehenden Störstoffe erfordert einen hohen Sortier- und Reinigungsaufwand.

Aus der DE 34 39 098 A1 ist ein Verfahren bekannt, bei dem vor der Auflösung im Stofflöser mehrere Zerkleinerungs- und Reinigungsschritte an dem noch nicht suspendierten Altpapier durchgeführt werden. Dieses Verfahren ist zwar gut und wirksam, aber aufwendig.

Aus der DE 197 53 202 A1 ist ein System bekannt, welches der Aufbereitung von Verpackungsabfällen dient. Dabei sollen sortenreine Kunststoffe gewonnen werden. Bei diesem Verfahren fällt auch eine Altpapiersorte an, die als lufttrockenen Papierstücken oder -fetzen besteht und schon einen gewissen Reinheitsgrad aufweist; sie ist aber nicht frei von Störstoffen, insbesondere anhaftenden Kunststofffolien, z.B. von Getränkekartons.

Der Erfindung liegt die Aufgabe zu Grunde, ein Verfahren zu schaffen, mit dem es möglich ist, das Altpapier kontinuierlich auf besonders wirtschaftliche Weise zu einer Papierfasersuspension aufzuarbeiten, möglichst so, dass der übliche Altpapier-Stofflöser und eine aufwendige Grobsortierung eingespart werden können.

Diese Aufgabe wird durch die im Anspruch 1 genannten Verfahrensschritte gelöst.

Bei diesem Verfahren wird also das als Rohstoff eingesetzte, angelieferte Altpapier zu Beginn der Aufbereitung in einer durch Zerkleinern der Papierbahnen entstandenen stückigen Form (Papierfetzen)nicht in einen Stofflöser, sondern direkt in eine Altpapierknetvorrichtung eingetragen. Bei dem angegebenen Wassergehalt ist diese in der Lage, die ansonsten z.B. im Stofflöser mögliche Wirkung durchzuführen. Günstig ist, dass solche Knetvorrichtungen kontinuierlich betrieben werden können. Stofflöser dagegen, die für solche Rohstoffe verwendbar sind, werden am besten absatzweise betrieben. Das gilt besonders für Hochkonsistenz-Stofflöser im Konsistenzbereich 8 bis 15 %.

Die Auflösewirkung kann durch Erwärmung des Altpapiers noch verstärkt werden. Dabei ist diese Temperatur allerdings auf die im Altpapier noch vorhandenen Verunreinigungen abzustimmen, um das ungewollte Zerkleinern von weichen, faserfremden Störstoffen zu vermeiden. Bei solchen Rohstoffen befinden sich nämlich oft auf den Papierbahnen Kunststoffbeschichtungen, die relativ dünn und leicht zerreißbar sind, wenn auch nicht so leicht wie die durch Wasser gequollene Papierbahn. Gerade solche Störstoffe können dann erfindungsgemäß in der nachfolgenden Mittelkonsistenz-Sortierung besonders wirksam und ökonomisch entfernt werden. In Sonderfällen kann anstelle der Mittelkonsistenz-Sortierung auch eine Dünnstoffsortierung mit besserem Erfolg, aber höherem Aufwand erfolgen. Die sehr kleinen und noch nicht entfernten Störstoffe, insbesondere kleine Schwerteile, können in der sich anschließenden Hydrozyklonbehandlung entfernt werden, wozu sich hochwirksame Cleaner besonders gut eignen.

Die Erfindung und ihre Vorteile werden erläutert an Hand von Zeichnungen. Dabei zeigen:
- Fig. 1: ein vereinfachtes Anlagenschema, geeignet zur Durchführung des erfindungsgemäßen Verfahrens;
- Fig. 2: eine Variante mit Trommel zur Knetung;
- Fig. 3: eine andere Ansicht der Trommel gemäß Fig. 2.
- Fig. 4: eine regelungstechnische Variante für die Knetung

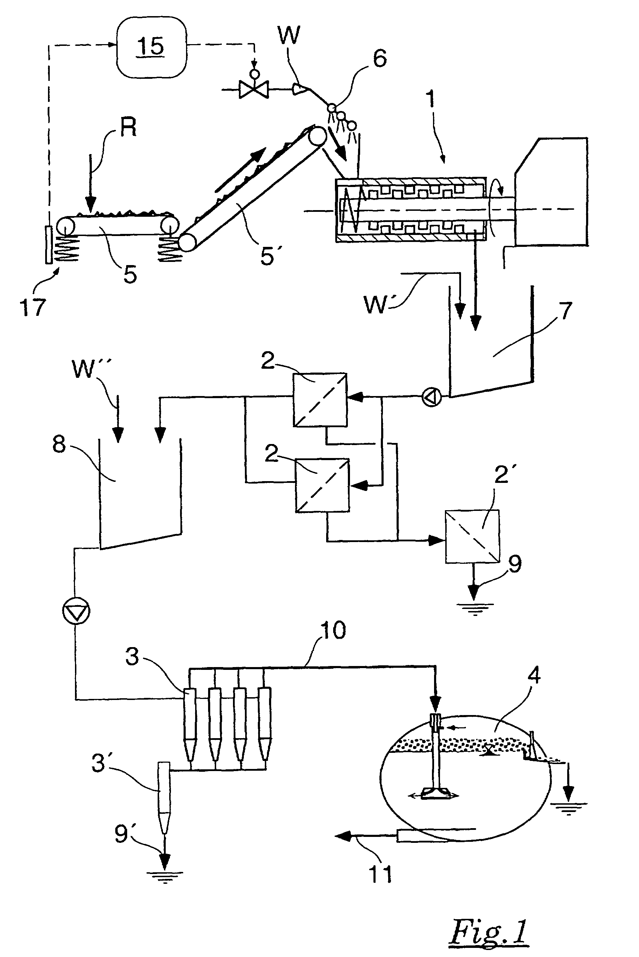

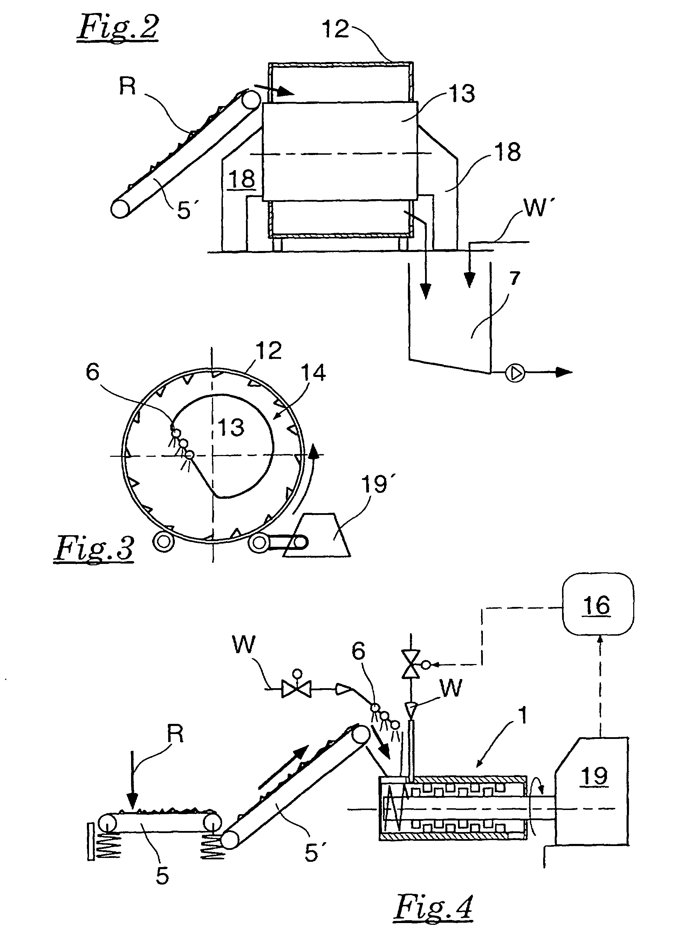

In der in Fig. 1 schematisch dargestellten Anlage fällt das Altpapier R in stückiger Form, wie sie z.B. durch Shreddern von Altpapier entsteht, auf ein erstes Förderband 5, und zwar in einer lockeren Schüttung. Das Förderband 5 kann mit einer Wiegeeinrichtung 17 versehen sein, um die Menge des eingetragenen Altpapiers R zu erfassen. Am Ende des ersten Förderbandes 5 befindet sich ein zweites Förderband 5', das das Altpapier auf die erforderliche geodätische Höhe bringt. Solche Verteil- und Fördereinrichtungen sind bekannt und daher hier nur angedeutet. Ihr Bedarf hängt von den räumlichen Bedingungen ab und davon, wie weit das angelieferte Altpapier aufgelockert ist. Der Altpapier-Rohstoff wird, ohne dass er vorher aufgelöst, also in Suspension gebracht wurde, in einen Einwellenzerfaserer 1 eingeführt und dabei mit Hilfe von Spritzrohren 6 mit der erforderlichen Menge Wasser W besprüht. Das Wasser kann auch direkt in den Kneter eingeleitet werden (siehe z.B. Fig.4). Von Vorteil ist es, wenn die Wassermenge auf die von der Wiegeeinrichtung 17 erfasste Altpapiermenge durch einen Regler 15 abgestimmt wird. Einwellenzerfaserer 1 und Zweiwellenzerfaserer sind gut geeignete Apparate, um die Knetung auszuführen, aber nicht die einzigen. Im Gegensatz zum Stofflöser können in solchen Apparaten die Scherkräfte in der gewünschten Größe gleichmäßig auf alle Anteile des Stoffes übertragen werden. Das dient der Energieökonomie und ist wichtig bei empfindlichen Störstoffen (Folien, Stickies) und bei der Ablösung der Druckfarbenpartikel von den Fasern. Diese letztgenannte Vorbereitung auf später durchzuführende Deinkingverfahren ist bei den hier betrachteten Altpapier-Rohstoffen von besonderer Bedeutung.

Nach dieser mechanischen Bearbeitung des Altpapiers fällt es in die Verdünnungsbütte 7. Hinzu kommt das Wasser W' zur Erzeugung einer Suspension mit der Konsistenz, die für die nachfolgende Aussortierung von faserfremden Störstoffen zweckmäßig ist. Dieses Aussortieren wird mit Hilfe einer Nasssiebung durchgeführt, die bei dem hier gezeigten Beispiel mehrstufig ist. Das heißt, der Überlauf der beiden exemplarisch gezeichneten Drucksortierer 2 wird zusammengefasst und einem weiteren Drucksortierer 2' zugeführt, der den Rejekt 9 bildet. Solche Schaltungen sind dem Fachmann bekannt. Durch die an dieser Stelle vorgenommene Aussortierung besteht die Möglichkeit, einen großen Teil der im Altpapier vorhandenen Verunreinigungen, insbesondere Kunststofffolien, im Rejekt 9 auszuscheiden. Das ist darauf zurückzuführen, dass hier Aufschlussgrad des Altpapiers und Zustand der Störstoffe, z.B. Kunststofffolien für eine solche Aussortierung besonders günstig sind. Der Durchlauf der Drucksortierer 2 fließt in die Bütte 8 ab, in der das Wasser W" zugegeben wird, um die Konsistenz weiter zu reduzieren. Es folgt dann die Ausscheidung von kleineren Schwerteilen in einer Batterie von Cleanem 3. Auch diese Anlage ist mehrstufig. Der Überlauf der Cleaner 3 geht in den Sekundärcleaner 3' zur Bildung des Rejekts 9'. Der Gutstoff 10 der Cleaner 3 wird hier in eine Deinkinganlage 4 eingeführt, in der feine Störstoffe in bekannter Weise durch Flotation entfernt werden. Auch diese kann mehrstufig sein. Der so gewonnene Gutstoff 11 ist, was den Auflösegrad und die Reinheit betrifft, von einer ausgezeichneten Qualität, so dass er zur Papiererzeugung verwendet werden kann.

Die Fig. 2 zeigt zur Durchführung der Knetung eine andere Vorrichtung, nämlich eine knetend wirkende rotierende Auflösetrommel 12, in der durch das Zusammenwirken von einem feststehenden Verdränger 13 der eingetragene und befeuchtete Altpapierstoff die für die Durchführung des Verfahrens erforderliche Knetung erfährt. Der Verdränger 13 wird von außen über zwei Ständer 18 gehalten. Es bildet sich zwischen Verdränger 13 und Auflösetrommel 12 eine Knetzone 14 mit intensiver Reibung und Scherung aus. Auch an anderen Stellen des Trommelinneren kann Knetarbeit übertragen werden. Eine solche oder ähnliche Vorrichtung ist z.B. aus der deutschen Patentanmeldung P 197 36 143 bekannt.

Die Fig. 3 zeigt die erwähnte Auflösetrommel 12 in Ansicht von der Stirnseite. Auch der Antiebsmotor 19' ist angedeutet. Die Darstellungen der Fig. 2 und 3 sind lediglich schematisch und sollen keine konstruktiven Details wiedergeben.

In Fig. 4 ist eine andere Regelung für den Kneter gezeigt. Dabei wird die Leistungsaufnahme des Antriebsmotors 19 erfasst und im Regler 16 zu einem Stellsignal für die Dosierung des Wassers W verarbeitet. Diese Regelung kann auch mit der in Fig. 1 gezeigten verknüpft werden. Die gemessene Leistungsaufnahme der Antriebsmotors 19 ermöglicht unter Hinzunahme der erfassten Altpapiermenge auch die Regelung der spezifischen Arbeit bei der Knetung. Der Antriebsmotor 19, der hier an den Einwellenzerfaserer 1 angekuppelt ist, könnte natürlich auch eine Auflösetrommel gemäß Fig. 2 oder 3 antreiben.

## Patentansprüche

1. Verfahren zur Auflösung von Altpapier (R) mit folgenden Schritten:
1.1 Einstellung des Feststoffgehaltes des Altpapiers (R), insbesondere durch Zugabe von Wasser (W), auf einen Wert zwischen 15 und 35 %;
1.2 Knetung mit einer spezifischen Arbeit von mindestens 10 kWh/to;
1.3 nachfolgende Verdünnung auf einen Feststoffgehalt unter 6 %;
1.4 nachfolgende Aussortierung von faserfremden Störstoffen, insbesondere Kunststofffolien mit Hilfe einer Nasssiebung;
1.5 nachfolgende Einstellung auf einen Feststoffgehalt unter 3 %, vorzugsweise unter 2 %;
1.6 nachfolgendes Ausscheiden von Schwerteilen mit Hilfe von Hydrozyklonen.

2. Verfahren nach Anspruch 1,
**dadurch gekennzeichnet,**
**dass** die Nasssiebung bei einer Konsistenz zwischen 2 und 5 % durchgeführt wird.

3. Verfahren nach Anspruch 1 oder 2,
**dadurch gekennzeichnet,**
**dass** die Nasssiebung in einer Nasssiebung mit runden Sieböffnungen von 1 bis 3 mm Durchmesser durchgeführt wird.

4. Verfahren nach Anspruch 1, 2 oder 3,
**dadurch gekennzeichnet,**
**dass** die Nasssiebung so betrieben wird, dass mindestens 80 % der Kunststofffolien ausgeschieden werden, die bei der Knetung im Altpapier enthalten sind.

5. Verfahren nach einem der voranstehenden Ansprüche,
**dadurch gekennzeichnet,**
**dass** die Nasssiebung in mindestens einem Drucksortierer (2, 2') durchgeführt wird.

6. Verfahren nach einem der voranstehenden Ansprüche,
**dadurch gekennzeichnet,**
**dass** die Temperatur des Altpapiers (R) bei der Knetung den Wert von 80° C überschreitet.

7. Verfahren nach einem der voranstehenden Ansprüche,
**dadurch gekennzeichnet,**
**dass** das Altpapier (R) vor der Knetung durch Aufsprühen von Wasser auf den erforderlichen Feststoffgehalt gebracht wird.

8. Verfahren nach einem der voranstehenden Ansprüche,
**dadurch gekennzeichnet,**
**dass** die Knetung in einem Einwellenzerfaserer (1) erfolgt.

9. Verfahren nach Anspruch 8,
**dadurch gekennzeichnet,**
**dass** der Einwellenzerfaserer (1) mit Knetwerkzeugen betrieben wird, die in einem Abstand von mindestens 10 mm mit einer Geschwindigkeit von höchstens 15 m/sec relativ zueinander bewegt werden.

10. Verfahren nach einem der Ansprüche 1 bis 7,
**dadurch gekennzeichnet,**
**dass** die Knetung in einem Zweiwellenzerfaserer erfolgt.

11. Verfahren nach Anspruch 8, 9 oder 10,
**dadurch gekennzeichnet,**
**dass** die Knetung mindestens 2 min lang durchgeführt wird.

12. Verfahren nach einem der Ansprüche 1 bis 7,
**dadurch gekennzeichnet,**
**dass** die Knetung in einem mit ineinandergreifenden Zahnreihen versehenen Scheibendisperger durchgeführt wird.

13. Verfahren nach einem der Ansprüche 1 bis 7,
**dadurch gekennzeichnet,**
**dass** die Knetung in einer sich drehenden, mit mindestens einem bewegten Mahlkörper versehenen Trommel durchgeführt wird, wobei die radiale Erstreckung des Mahlkörpers mindestens 10 % des Trommeldurchmessers beträgt.

14. Verfahren nach einem der Ansprüche 1 bis 7,
**dadurch gekennzeichnet,**
**dass** die Knetung in einer sich drehenden, mit einem feststehenden Verdrängerkörper (13) versehenen Trommel (12) durchgeführt wird, wobei zwischen Verdrängerkörper (13) und Trommel (12) eine Knetzone gebildet wird.

15. Verfahren nach einem der Ansprüche 7 bis 14,
**dadurch gekennzeichnet,**
**dass** die Knetung kontinuierlich durchgeführt wird.

16. Verfahren nach Anspruch 15,
**dadurch gekennzeichnet,**
**dass** die Knetintensität eingestellt und nach mindestens einer am Altpapier nach dem Kneten ermittelten Qualitätsgröße geregelt wird.

17. Verfahren nach Anspruch 16,
**dadurch gekennzeichnet,**
**dass** die Qualitätsgröße die beim nachfolgenden Deinken erzielte Weiße ist.

18. Verfahren nach einem der voranstehenden Ansprüche,
**dadurch gekennzeichnet,**
**dass** das nicht suspendierte Altpapier (R) vor der Knetung so weit vorzerkleinert wird, dass Bahnen oder Blätter zum überwiegenden Teil mehrfach zerrissen werden.

19. Verfahren nach Anspruch 18,
**dadurch gekennzeichnet,**
**dass** aus den Altpapier-Stücken (R) vor der Knetung die groben Verunreinigungen, insbesondere die groben Schwerteile, ausgeschieden werden.

20. Verfahren nach Anspruch 18 oder 19,
**dadurch gekennzeichnet,**
**dass** vor der Knetung mit Hilfe eines Magnetabscheiders Eisenteile entfernt werden.

21. Verfahren nach Anspruch 18, 19 oder 20,
**dadurch gekennzeichnet,**
**dass** vor der Knetung Ballen-Bindedrähte entfernt werden.

22. Verfahren nach einem der voranstehenden Ansprüche,
**dadurch gekennzeichnet,**
**dass** die Schwerteile aus der Suspension mit Cleanem (3, 3') entfernt werden, deren Kraftfeld über 500 Mal Erdbeschleunigung liegt.

23. Verfahren nach einem der voranstehenden Ansprüche,
**dadurch gekennzeichnet,**
**dass** aus dem gekneteten und suspendierten Altpapier in einer Deinkinganlage (4) feine Verunreinigungen, insbesondere Druckfarben, entfernt werden.

24. Verfahren nach Anspruch 23,
**dadurch gekennzeichnet,**
**dass** die Deinkinganlage stromabwärts der Hydrozyklone geschaltet wird.

25. Verfahren nach einem der voranstehenden Ansprüche,
**dadurch gekennzeichnet,**
**dass** kein Stofflöser eingesetzt wird.

26. Verfahren nach einem der voranstehenden Ansprüche,
**dadurch gekennzeichnet,**
**dass** keine Auflösetrommel mit reiner Fallwirkung eingesetzt wird.

27. Verfahren nach einem der voranstehenden Ansprüche,
**dadurch gekennzeichnet,**
**dass** keine Sortierung bei einer Konsistzen unter 2 % durchgeführt wird.

28. Verfahren nach einem der voranstehenden Ansprüche,
**dadurch gekennzeichnet,**
**dass** keine Hydrozyklone bei einer Konsistenz über 2 % eingesetzt werden.

29. Verfahren nach einem der voranstehenden Ansprüche,
**dadurch gekennzeichnet,**
**dass** das Verfahren kontinuierlich durchgeführt wird.

30. Verfahren nach einem der voranstehenden Ansprüche,
**dadurch gekennzeichnet,**
**dass** die Menge des zugegebenen Wassers (W) auf die Menge des aufzulösenden Altpapiers (R) abgestimmt wird.

31. Verfahren nach einem der voranstehenden Ansprüche,
**dadurch gekennzeichnet,**
**dass** die Menge des zugegebenen Wassers (W) auf die Antriebsleistung für die Knetung so abgestimmt wird, das die Antiebsleistung geregelt ist.

32. Verfahren nach einem der Ansprüche 1 bis 30,
**dadurch gekennzeichnet,**
**dass** die Menge des zugegebenen Wassers (W) auf die Antriebsleistung für die Knetung und die Menge des Altpapiers (R) so abgestimmt wird, das die spezifische Arbeit der Knetung geregelt ist.

## Claims

1. Method of pulping wastepaper (R) by the following steps:
1.1 adjusting the solid content of the wastepaper (R), in particular by adding water (W), to a value of between 15 and 35%;
1.2 kneading with a specific effort of at least 10 kWh/to;
1.3 subsequent thinning to a solid content of less than 6%;
1.4 subsequent sorting of unwanted, non-fibrous materials, in particular plastics foils by means of wet screening;
1.5 subsequent adjustment to a solid content of less than 3%, preferably less than 2%;
1.6 subsequent separation of heavy components by means of hydrocyclones.

2. Method according to claim 1, **characterised in that** wet screening is carried out at a consistency of between 2 and 5%.

3. Method according to claim 1 or 2, **characterised in that** wet screening is carried out in a wet screen with round screen apertures of 1 to 3 mm diameter.

4. Method according to claim 1, 2 or 3, **characterised in that** wet screening is so operated that at least 80% of the plastics foils contained in the wastepaper during kneading are separated.

5. Method according to one of the preceding claims, **characterised in that** wet screening is carried out in at least one pressure sorter (2, 2').

6. Method according to one of the preceding claims, **characterised in that** the temperature of the wastepaper (R) during kneading exceeds the value 80°C.

7. Method according to one of the preceding claims, **characterised in that** the wastepaper (R) is brought to the necessary solid content by spraying on water before kneading.

8. Method according to one of the preceding claims, **characterised in that** kneading is carried out in a single-shaft pulp machine (1)

9. Method according to claim 8, **characterised in that** the single-shaft pulp machine (1) is operated with kneading tools, which are moved relative to one another at least 10 mm apart at a speed of at most 15 m/sec.

10. Method according to one of claims 1 to 7, **characterised in that** kneading is carried out in a double-shaft pulp machine.

11. Method according to claim 8, 9 or 10, **characterised in that** kneading is carried out for at least 2 minutes.

12. Method according to one of claims 1 to 7, **characterised in that** kneading is carried out in a disc disperser provided with interlocking rows of splines.

13. Method according to one of claims 1 to 7, **characterised in that** kneading is carried out in a rotating drum provided with at least one moving grinding body, the radial extension of the grinding body being at least 10% of the drum diameter.

14. Method according to one of claims 1 to 7, **characterised in that** kneading is carried out in a rotating drum (12) provided with a fixed displacement body (13), a kneading zone being formed between the displacement body (13) and the drum (12).

15. Method according to one of claims 7 to 14, **characterised in that** kneading is carried out continuously.

16. Method according to claim 15, **characterised in that** the kneading intensity is adjusted and controlled according to at least one variable of quality taken on the wastepaper after kneading.

17. Method according to claim 16, **characterised in that** the variable of quality is the whiteness obtained during subsequent de-inking.

18. Method according to one of the preceding claims, **characterised in that** the wastepaper (R) not suspended is pre-comminuted before kneading to the extent that strips or sheets are for the majority torn up into plural pieces.

19. Method according to claim 18, **characterised in that** from the pieces of wastepaper (R), the coarse contaminants, in particular coarse heavy components, are separated before kneading.

20. Method according to claim 18 or 19, **characterised in that** iron particles are removed before kneading by means of a magnetic separator.

21. Method according to claim 18, 19 or 20, **characterised in that** bale binding wires are removed before kneading.

22. Method according to one of the preceding claims, **characterised in that** the heavy components are removed from the suspension with cleaners (3, 3'), whose range of strength is more than 500 times earth acceleration.

23. Method according to one of the preceding claims, **characterised in that** in a de-inking plant (4), fine contaminants, in particular printing inks, are removed from the kneaded, suspended wastepaper.

24. Method according to claim 23, **characterised in that** the de-inking plant is connected upstream of the hydrocyclone.

25. Method according to one of the preceding claims, **characterised in that** no fabric solvent is used.

26. Method according to one of the preceding claims, **characterised in that** no pulping drum with pure gravitational action is used.

27. Method according to one of the preceding claims, **characterised in that** no sorting is carried out at a consistency of less than 2%.

28. Method according to one of the preceding claims, **characterised in that** no hydrocyclone is used at a consistency of more than 2%.

29. Method according to one of the preceding claims, **characterised in that** the method is carried out continuously.

30. Method according to one of the preceding claims, **characterised in that** the quantity of added water (W) is determined by the quantity of wastepaper (R) to be pulped.

31. Method according to one of the preceding claims, **characterised in that** the quantity of water (W) added is so set to the drive power for kneading that the drive power is controlled.

32. Method according to one of claims 1 to 30, **characterised in that** the quantity of water (W) added is so tuned to the drive power for kneading and the quantity of wastepaper (R) that the specific effort of kneading is controlled.

## Revendications

1. Procédé destiné à la dissolution de vieux papiers (R), comportant les phases suivantes :
1.1 réglage de la teneur en matières solides des vieux papiers (R) à une valeur comprise entre 15 et 35 %, notamment par l'ajout d'eau (W) ;
1.2 malaxage avec une puissance spécifique d'au moins 10 kWh/to ;
1.3 dilution consécutive à une teneur en matières solides inférieure à 6 % ;
1.4 tri consécutif d'impuretés étrangères aux fibres, notamment de films en matière plastique, à l'aide d'un criblage par voie humide ;
1.5 réglage consécutif à une teneur en matières solides inférieure à 3 %, de préférence inférieure à 2 % ;
1.6 élimination consécutive de particules lourdes à l'aide d'hydrocyclones.

2. Procédé selon la revendication 1,
**caractérisé en ce que**
le criblage par voie humide est effectué à une consistance comprise entre 2 et 5 %.

3. Procédé selon la revendication 1 ou 2,
**caractérisé en ce que**
le criblage par voie humide est effectué dans un criblage par voie humide comportant des orifices de criblage ronds d'un diamètre de 1 à 3 mm.

4. Procédé selon la revendication 1, 2 ou 3
**caractérisé en ce que**
le criblage par voie humide fonctionne de telle sorte qu'au moins 80 % des films en matière plastique, qui sont contenus dans les vieux papiers lors du malaxage, soient éliminés.

5. Procédé selon l'une quelconque des revendications précédentes,
**caractérisé en ce que**
le criblage par voie humide est effectué dans au moins un trieur sous pression (2, 2').

6. Procédé selon l'une quelconque des revendications précédentes,
**caractérisé en ce que**
la température des vieux papiers (R) dépasse la valeur de 80 °C lors du malaxage.

7. Procédé selon l'une quelconque des revendications précédentes,
**caractérisé en ce que**,
avant le malaxage, les vieux papiers (R) sont amenés à la teneur nécessaire en matières solides par une pulvérisation d'eau.

8. Procédé selon l'une quelconque des revendications précédentes,
**caractérisé en ce que**
le malaxage est effectué dans un triturateur à un arbre (1).

9. Procédé selon la revendication 8,
**caractérisé en ce que**
le triturateur à un arbre (1) fonctionne avec des outils de malaxage, qui sont déplacés les uns par rapport aux autres à un écartement d'au moins 10 mm, à une vitesse maximale de 15 m/s.

10. Procédé selon l'une quelconque des revendications 1 à 7,
**caractérisé en ce que**
le malaxage est effectué dans un triturateur à deux arbres.

11. Procédé selon la revendication 8, 9 ou 10,
**caractérisé en ce que**
le malaxage est effectué pendant au moins 2 min.

12. Procédé selon l'une quelconque des revendications 1 à 7,
**caractérisé en ce que**
le malaxage est effectué dans un disperseur à disques pourvu de rangées de dents s'engrènant les unes dans les autres.

13. Procédé selon l'une quelconque des revendications 1 à 7,
**caractérisé en ce que**
le malaxage est effectué dans un tambour rotatif comportant au moins un corps de broyage mobile, l'extension radiale du corps de broyage étant égale à au moins 10 % du diamètre du tambour.

14. Procédé selon l'une quelconque des revendications 1 à 7,
**caractérisé en ce que**
le malaxage est effectué dans un tambour rotatif (12) comportant un corps de refoulement (13) stationnaire, une zone de malaxage étant formée entre le corps de refoulement (13) et le tambour (12).

15. Procédé selon l'une quelconque des revendications 7 à 14,
**caractérisé en ce que**
le malaxage est effectué en continu.

16. Procédé selon la revendication 15,
**caractérisé en ce que**
l'intensité du malaxage est réglée, et régulée selon au moins un critère de qualité déterminé sur les vieux papiers après le malaxage.

17. Procédé selon la revendication 16,
**caractérisé en ce que**
le critère de qualité est la qualité du blanc obtenue lors du désencrage consécutif.

18. Procédé selon l'une quelconque des revendications précédentes,
**caractérisé en ce que**
les vieux papiers (R) non encore mis en suspension sont préalablement déchiquetés avant le malaxage de telle sorte que des bandes ou des feuilles soient en majeure partie déchirées à plusieurs reprises.

19. Procédé selon la revendication 18,
**caractérisé en ce que**
les impuretés grossières, notamment les particules lourdes grossières, sont éliminées des morceaux de vieux papiers (R) avant le malaxage.

20. Procédé selon la revendication 18 ou 19,
**caractérisé en ce que**
des particules de fer sont éliminées avant le malaxage à l'aide d'un séparateur magnétique.

21. Procédé selon la revendication 18, 19 ou 20,
**caractérisé en ce que**
des fils de fer d'attache des ballots sont retirés avant le malaxage.

22. Procédé selon l'une quelconque des revendications précédentes,
**caractérisé en ce que**
les particules lourdes sont éliminées de la suspension avec des épurateurs (3, 3'), dont le champ de force est situé 500 fois au-dessus de l'accélération de la pesanteur.

23. Procédé selon l'une quelconque des revendications précédentes,
**caractérisé en ce que**
de fines impuretés, notamment des encres d'impression, sont éliminées des vieux papiers malaxés et mis en suspension dans une installation de désencrage (4).

24. Procédé selon la revendication 23,
**caractérisé en ce que**
l'installation de désencrage est placée en aval des hydrocyclones.

25. Procédé selon l'une quelconque des revendications précédentes,
**caractérisé en ce que**
il n'est pas utilisé de broyeur.

26. Procédé selon l'une quelconque des revendications précédentes,
**caractérisé en ce que**
il n'est pas utilisé de tambour de dissolution à pur effet de chute.

27. Procédé selon l'une quelconque des revendications précédentes,
**caractérisé en ce que**
il n'est pas effectué de tri à une consistance inférieure à 2 %.

28. Procédé selon l'une quelconque des revendications précédentes,
**caractérisé en ce que**
il n'est pas utilisé d'hydrocyclones à une consistance supérieure à 2 %.

29. Procédé selon l'une quelconque des revendications précédentes,
**caractérisé en ce que**
le procédé est mis en oeuvre en continu.

30. Procédé selon l'une quelconque des revendications précédentes,
**caractérisé en ce que**
la quantité de l'eau (W) ajoutée est adaptée à la quantité de vieux papiers (R) à dissoudre.

31. Procédé selon l'une quelconque des revendications précédentes,
**caractérisé en ce que**
la quantité de l'eau (W) ajoutée est adaptée à la puissance d'entraînement pour le malaxage de telle sorte que la puissance d'entraînement soit régulée.

32. Procédé selon l'une quelconque des revendications 1 à 30,
**caractérisé en ce que**
la quantité de l'eau (W) ajoutée est adaptée à la puissance d'entraînement pour le malaxage, et à la quantité de vieux papiers (R), de telle sorte que la puissance spécifique du malaxage soit régulée.
